# EUROPEAN PATENT APPLICATION

(11) **EP 4 571 660 A1**
(43) Date of publication of application: **18.06.2025**
(21) Application number: 22955122.1
(22) Date of filing: 08.12.2022
(51) Int. Cl.: G06T 19/00, G06T 15/00, G02B 27/01, G02B 30/10

(54) **SIGNAL PROCESSING DEVICE AND AUTOMOTIVE AUGMENTED REALITY DEVICE HAVING SAME**

(30) Priority: 09.08.2022 KR 20220099479
(71) Applicant: LG Electronics Inc., Yeongdeungpo-gu Seoul 07336 (KR)
(72) Inventor: CHOI, Sunghwan, Seoul 06772 (KR); JUNG, Dukyung, Seoul 06772 (KR); PARK, Namyong, Seoul 06772 (KR)
(74) Representative: Vossius & Partner Patentanwälte Rechtsanwälte mbB
(86) International application number: PCT/KR2022/019980
(87) International publication number: WO 2024/034750

(57) **Abstract**

A signal processing device and an augmented reality apparatus for a vehicle including the same are disclosed. The signal processing device according to an embodiment of the present disclosure includes: a memory to store map data; and a processor to generate a graphical overlay based on camera data from a camera, the map data, or sensor data from a sensor device, wherein the processor is configured to execute a plurality of virtual machines on an hypervisor, and generate a first graphical overlay through a first augmented reality engine or generate a second graphical overlay, including less data than the first graphical overlay, through a second augmented reality engine, in response to the first augmented reality engine being stopped, output the second graphical overlay instead of the first graphical overlay. Accordingly, an augmented reality-based overlay may be stably provided.

## Description

### BACKGROUND

### 1. Field

. The present disclosure relates to a signal processing device and an augmented reality apparatus for a vehicle including the same, and more particularly to a signal processing device capable of stably providing an augmented reality-based overlay, and an augmented reality apparatus for a vehicle including the signal processing device.

### 2. Description of the Related Art

. A vehicle is an apparatus that a driver moves in a desired direction. A typical example of the vehicle is an automobile.

. Meanwhile, a display apparatus for vehicles is mounted in the vehicle to provide user convenience.

. For example, a display is disposed in a cluster in order to display various types of information. Meanwhile, in addition to the cluster, various displays, such as an audio video navigation (AVN) display, a head-up display for displaying a projected image on the windshield, etc., are mounted in the vehicle to display vehicle driving information and the like.

. Particularly, the head-up display, which displays the projected image on the windshield, may be referred to as an in-vehicle augmented reality apparatus.

. Meanwhile, the in-vehicle augmented reality apparatus has a problem in that when providing guide for situations in front of the vehicle, the in-vehicle augmented reality apparatus is required to provide guide for safety driving under any circumstances, but if an augmented reality engine in the in-vehicle augmented reality apparatus is stopped, the guide for safe driving cannot be provided.

### SUMMARY

. It is an objective of the present disclosure to provide a signal processing device capable of stably providing an augmented reality-based overlay, and an augmented reality apparatus for a vehicle including the signal processing device.

. Meanwhile, it is another objective of the present disclosure to provide a signal processing device capable of stably providing an augmented reality-based overlay even when an augmented reality engine is stopped, and an augmented reality apparatus for a vehicle including the signal processing device.

. Meanwhile, it is yet another objective of the present disclosure to provide a signal processing device capable of rapidly providing a first graphical overlay or a second graphical overlay when an augmented reality engine is stopped or restored, and an augmented reality apparatus for a vehicle including the signal processing device.

. In accordance with an aspect of the present disclosure, the above and other objectives can be accomplished by providing a signal processing device including: a memory configured to store map data; and a processor configured to generate a graphical overlay based on camera data from a camera, the map data, or sensor data from a sensor device, wherein the processor is configured to execute a plurality of virtual machines on an executed hypervisor, and to generate a first graphical overlay through a first augmented reality engine executed in one of the plurality of virtual machines or to generate a second graphical overlay, including less data than the first graphical overlay, through a second augmented reality engine executed in some of the plurality of virtual machines, wherein in response to the first augmented reality engine being stopped, the processor is configured to output the second graphical overlay instead of the first graphical overlay.

. Meanwhile, in response to the first augmented reality engine being stopped, the processor may be configured to execute the second augmented reality engine, and generate and output the second graphical overlay.

. Meanwhile, in response to the first augmented reality engine being stopped, the second augmented reality engine may be configured to transmit data related to the first graphical overlay to the second augmented reality engine by using the hypervisor.

. Meanwhile, in response to the first augmented reality engine being restored, the second augmented reality engine may be configured to transmit data related to the second graphical overlay to the first augmented reality engine by using the hypervisor.

. Meanwhile, in response to the first augmented reality engine being restored, the second augmented reality engine may be configured to transmit data related to the second graphical overlay to the first augmented reality engine through a shared memory or an input and output resource manager based on the hypervisor.

. Meanwhile, in response to interruption of the first augmented reality engine being detected by a system monitor executed in the hypervisor, the second augmented reality engine may be configured to generate and output the second graphical overlay through the input and output resource manager based on the hypervisor; and in response to restoration of the first augmented reality engine being detected by the system monitor executed in the hypervisor, the second augmented reality engine may be configured to transmit data related to the second graphical overlay to the first augmented reality engine through the input and output resource manager.

. Meanwhile, a guest virtual machine among the plurality of virtual machines may be configured to execute the first augmented reality engine, and a server virtual machine among the plurality of virtual machines may be configured to execute the second augmented reality engine.

. Meanwhile, the first augmented reality engine may be executed on a first operating system, and the second augmented reality engine may be executed on a second operating system different from the first operating system.

. Meanwhile, a first data interface may be executed on the first operating system, and the first augmented reality engine may be executed on the first data interface; and a second data interface may be executed on the second operating system, and the second augmented reality engine may be executed on the second data interface.

. Meanwhile, the input and output resource manager executed based on the hypervisor may be configured to receive camera data or sensor data from a camera or a sensor device, and to provide the camera data or the sensor data to the first augmented reality engine or the second augmented reality engine.

. Meanwhile, the processor may be configured to execute the first augmented reality engine and the second augmented reality engine, and in response to the first augmented reality engine being stopped, the processor may be configured to output the second graphical overlay instead of the first graphical overlay.

. Meanwhile, the first augmented reality engine may be executed on a first operating system, the second augmented reality engine may be executed on a second operating system different from the first operating system, a data interface may be executed based on the hypervisor, the first augmented reality engine may be executed on the first operating system, and the second augmented reality engine may be executed on the second operating system.

. Meanwhile, the input and output resource manager executed based on the hypervisor may be configured to receive camera data or sensor data from a camera or a sensor device, and to provide the camera data or the sensor data to the first augmented reality engine or the second augmented reality engine.

. Meanwhile, the first graphical overlay may include a first layer and a second layer, and the second graphical overlay may include the first layer and a third layer including less data than the second layer.

. Meanwhile, the first layer may include vehicle speed information and vehicle heading direction information, the second layer may include a preceding vehicle object and an indicator of a distance to a preceding vehicle, and the third layer may include the preceding vehicle object.

. Meanwhile, a server virtual machine among the plurality of virtual machines may be configured to execute the first augmented reality engine and the second augmented reality engine.

. Meanwhile, any one guest virtual machine among the plurality of virtual machines may be configured to execute the first augmented reality engine and the second augmented reality engine.

. In accordance with another aspect of the present disclosure, the above and other objectives can be accomplished by providing an augmented reality apparatus for a vehicle, the apparatus including: at least one camera; an image projection device configured to project forward an image; and a signal processing device including a processor configured to generate a graphical overlay based on camera data from the camera.

### EFFECTS OF THE DISCLOSURE

. A signal processing device according to an embodiment of the present disclosure includes: a memory configured to store map data; and a processor configured to generate a graphical overlay based on camera data from a camera, the map data, or sensor data from a sensor device, wherein the processor is configured to execute a plurality of virtual machines on an executed hypervisor, and to generate a first graphical overlay through a first augmented reality engine executed in one of the plurality of virtual machines or to generate a second graphical overlay, including less data than the first graphical overlay, through a second augmented reality engine executed in some of the plurality of virtual machines, wherein in response to the first augmented reality engine being stopped, the processor is configured to output the second graphical overlay instead of the first graphical overlay. Accordingly, an augmented reality-based overlay may be stably provided. Particularly, the augmented reality-based overlay may be stably provided even in response to the first augmented reality engine being stopped.

. Meanwhile, in response to the first augmented reality engine being stopped, the processor may be configured to execute the second augmented reality engine, and generate and output the second graphical overlay. Accordingly, the augmented reality-based second graphical overlay may be rapidly provided.

. Meanwhile, in response to the first augmented reality engine being stopped, the second augmented reality engine may be configured to transmit data related to the first graphical overlay to the second augmented reality engine by using the hypervisor. Accordingly, the augmented reality-based second graphical overlay may be rapidly provided.

. Meanwhile, in response to the first augmented reality engine being restored, the second augmented reality engine may be configured to transmit data related to the second graphical overlay to the first augmented reality engine by using the hypervisor. Accordingly, the augmented reality-based first graphical overlay may be rapidly provided.

. Meanwhile, in response to the first augmented reality engine being restored, the second augmented reality engine may be configured to transmit data related to the second graphical overlay to the first augmented reality engine through a shared memory or an input and output resource manager based on the hypervisor. Accordingly, the augmented reality-based first graphical overlay may be rapidly provided.

. Meanwhile, in response to interruption of the first augmented reality engine being detected by a system monitor executed in the hypervisor, the second augmented reality engine may be configured to generate and output the second graphical overlay through the input and output resource manager based on the hypervisor; and in response to restoration of the first augmented reality engine being detected by the system monitor executed in the hypervisor, the second augmented reality engine may be configured to transmit data related to the second graphical overlay to the first augmented reality engine through the input and output resource manager. Accordingly, the augmented reality-based first or second graphical overlay may be rapidly provided.

. Meanwhile, a guest virtual machine among the plurality of virtual machines may be configured to execute the first augmented reality engine, and a server virtual machine among the plurality of virtual machines may be configured to execute the second augmented reality engine. Accordingly, an augmented reality-based overlay may be stably and rapidly provided.

. Meanwhile, the first augmented reality engine may be executed on a first operating system, and the second augmented reality engine may be executed on a second operating system different from the first operating system. Accordingly, an augmented reality-based overlay may be stably and rapidly provided.

. Meanwhile, a first data interface may be executed on the first operating system, and the first augmented reality engine may be executed on the first data interface; and a second data interface may be executed on the second operating system, and the second augmented reality engine may be executed on the second data interface. Accordingly, an augmented reality-based overlay may be stably and rapidly provided.

. Meanwhile, the input and output resource manager executed based on the hypervisor may be configured to receive camera data or sensor data from a camera or a sensor device, and to provide the camera data or the sensor data to the first augmented reality engine or the second augmented reality engine. Accordingly, an augmented reality-based overlay may be stably and rapidly provided.

. Meanwhile, the processor may be configured to execute the first augmented reality engine and the second augmented reality engine, and in response to the first augmented reality engine being stopped, the processor may be configured to output the second graphical overlay instead of the first graphical overlay. Accordingly, the augmented reality-based second graphical overlay may be rapidly provided.

. Meanwhile, the first augmented reality engine may be executed on a first operating system, the second augmented reality engine may be executed on a second operating system different from the first operating system, a data interface may be executed based on the hypervisor, the first augmented reality engine may be executed on the first operating system, and the second augmented reality engine may be executed on the second operating system. Accordingly, the augmented reality-based second graphical overlay may be rapidly provided.

. Meanwhile, the input and output resource manager executed based on the hypervisor may be configured to receive camera data or sensor data from a camera or a sensor device, and to provide the camera data or the sensor data to the first augmented reality engine or the second augmented reality engine. Accordingly, an augmented reality-based overlay may be stably and rapidly provided.

. Meanwhile, the first graphical overlay may include a first layer and a second layer, and the second graphical overlay may include the first layer and a third layer including less data than the second layer. Accordingly, in response to the first augmented reality engine being stopped, the augmented reality-based second graphical overlay may be rapidly provided.

. Meanwhile, the first layer may include vehicle speed information and vehicle heading direction information, the second layer may include a preceding vehicle object and an indicator of a distance to a preceding vehicle, and the third layer may include the preceding vehicle object. Accordingly, an object corresponding to guide for safe driving may be stably provided.

. Meanwhile, a server virtual machine among the plurality of virtual machines may be configured to execute the first augmented reality engine and the second augmented reality engine. Accordingly, in response to the first augmented reality engine being stopped, the augmented reality-based second graphical overlay may be rapidly provided.

. Meanwhile, any one guest virtual machine among the plurality of virtual machines may be configured to execute the first augmented reality engine and the second augmented reality engine. Accordingly, an augmented reality-based overlay may be stably and rapidly provided.

. An augmented reality apparatus for a vehicle according to another embodiment of the present disclosure includes: at least one camera; an image projection device configured to project forward an image; and a signal processing device including a processor configured to generate a graphical overlay based on camera data from the camera. Accordingly, an augmented reality-based overlay may be stably provided. Particularly, the augmented reality-based overlay may be stably provided even when a first augmented reality engine is stopped.

### BRIEF DESCRIPTION OF THE DRAWINGS

FIG. 1 is a view showing an example of the exterior and interior of a vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system driven in a signal processing device related to the present disclosure;
FIG. 5 is a view showing an example of a system driven in a signal processing device according to an embodiment of the present disclosure;
FIG. 6 is a view referred to in the description of operation of the system driven in the signal processing device according to the embodiment of the present disclosure;
FIGS. 7A to 9D are diagrams referred to in the description of FIG. 5 or FIG. 6;
FIG. 10 is an exemplary internal block diagram illustrating a signal processing device according to an embodiment of the present disclosure;
FIG. 11 is an exemplary internal block diagram illustrating a processor of FIG. 10;
FIGS. 12 to 14B are diagrams referred to in the description of FIG. 10;
FIG. 15 is a block diagram illustrating a signal processing device according to another embodiment of the present disclosure; and
FIG. 16 is a block diagram illustrating a signal processing device according to yet another embodiment of the present disclosure.

### DETAILED DESCRIPTION

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

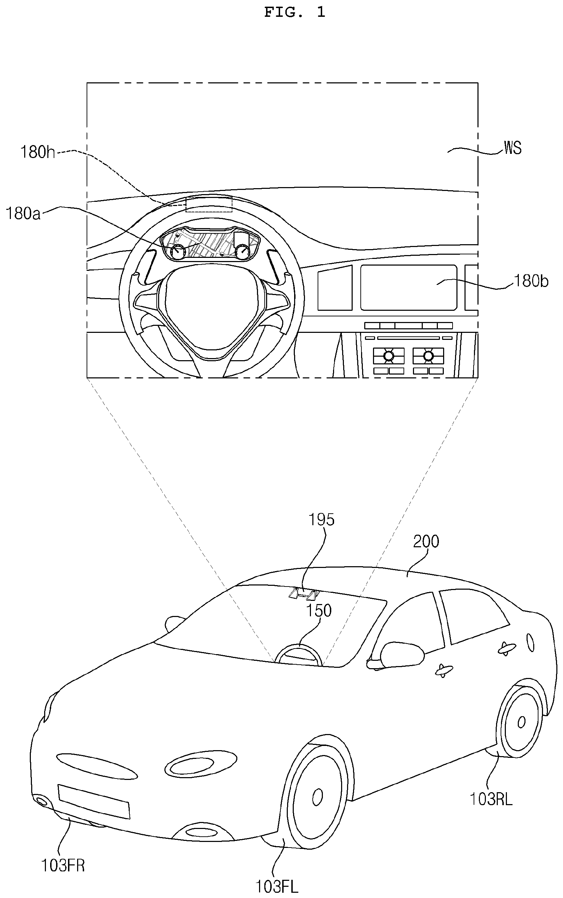

. FIG. 1 is a view showing an example of the exterior and interior of a vehicle.

. Referring to the figure, the vehicle 200 is moved by a plurality of wheels 103FR, 103FL, 103RL,... rotated by a power source and a steering wheel 150 configured to adjust an advancing direction of the vehicle 200.

. Meanwhile, the vehicle 200 may be provided with a camera 195 configured to acquire an image of the front of the vehicle.

. Meanwhile, the vehicle 200 may be provided therein with a plurality of displays 180a and 180b configured to display images, information, etc., and an image projection device 180h configured to project an image onto a windshield WS.

. In FIG. 1, a cluster display 180a and an audio video navigation (AVN) display 180b are illustrated as the plurality of displays 180a and 180b, and the image projection device 180h is illustrated as the head-up display (HUD).

. Meanwhile, the audio video navigation (AVN) display 180b may also be called a center information display.

. Meanwhile, the vehicle 200 described in this specification may be a concept including all of a vehicle having an engine as a power source, a hybrid vehicle having an engine and an electric motor as a power source, and an electric vehicle having an electric motor as a power source.

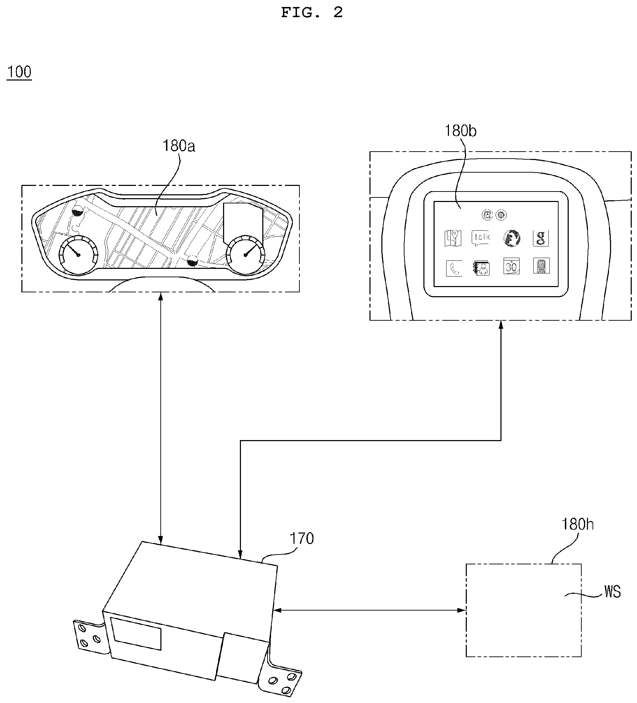

. FIG. 2 is a view showing the external appearance of a display apparatus for vehicles according to an embodiment of the present disclosure.

. A vehicle display apparatus 100 according to an embodiment of the present disclosure may include a plurality of displays 180a and 180b, an image projection device 180h, and a signal processing device 170 configured to perform signal processing for displaying images, information, and the like on the plurality of displays 180a and 180b and the image projection device 180h.

. The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

. The image projection device 180h, which is a head-up display (HUD), may include an optical device (not shown) for image projection.

. The signal processing device 170 may include a shared memory 508 and a processor 175, and may execute first to third virtual machines 520 to 540 on a hypervisor 505 in the processor 175.

. The first virtual machine 520, which is a server virtual machine, may control a second virtual machine 530 and a third virtual machine 50 which are guest virtual machines.

. Meanwhile, the second virtual machine may be referred to as a first guest virtual machine, and the third virtual machine may be referred to as a second guest virtual machine.

. The first guest virtual machine 530 may operate for the first display 180a, and the second guest virtual machine 540 may operate for the second display 180b.

. Meanwhile, the server virtual machine 520 in the processor 715 may be configured to set up the shared memory 508 based on the hypervisor 505 for transmission of identical data to the first guest virtual machine 530 and the second guest virtual machine 540. Accordingly, the first display 180a and the second display 180b in a vehicle may display identical information or identical images in a synchronized manner.

. Meanwhile, the server virtual machine 520 in the processor 175 may receive and process wheel speed sensor data of the vehicle, and may transmit the processed wheel speed sensor data to at least one of the first guest virtual machine 530 or the second guest virtual machine 540. Accordingly, at least one virtual machine may share the wheel speed sensor data of the vehicle.

. Accordingly, it is possible to control various displays 180a and 180b and the image projection device 180h by using the single signal processing device 170.

. Meanwhile, some of the plurality of displays 180a to 180b may be operated based on a Linux Operating System (OS), and others may be operated based on a Web Operating System (OS).

. The signal processing device 170 according to the embodiment of the present disclosure may be configured to operate displays 180a to 180b under various operating systems also display identical information or identical images in a synchronized state.

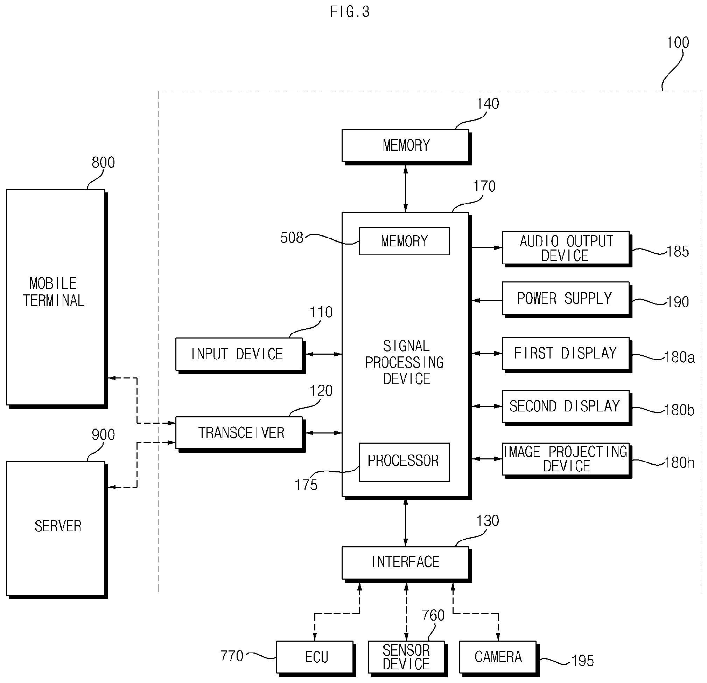

. FIG. 3 illustrates an example of an internal block diagram of the display apparatus for vehicles according to the embodiment of the present disclosure.

. Referring to FIG. 3, the vehicle display apparatus 100 according to the embodiment of the present disclosure may include an input device 110, a transceiver 120, an interface 130, a memory 140, a signal processing device 170, a plurality of displays 180a to 180b, an image projection device 180h, an audio output device 185, and a power supply 190.

. The input device 110 may include a physical button or pad for button input or touch input.

. Meanwhile, the input device 110 may include a microphone (not shown) for user voice input.

. The transceiver 120 may wirelessly exchange data with a mobile terminal 800 or a server (not shown).

. In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

. The transceiver 120 may receive weather information and road traffic situation information, such as transport protocol expert group (TPEG) information, from the mobile terminal 800 or the server (not shown). To this end, the transceiver 120 may include a mobile communication module (not shown).

. The interface 130 may receive sensor information from an electronic control unit (ECU) 770 or a sensor device 750, and may transmit the received information to the signal processing device 170.

. Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

. The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

. Meanwhile, the interface 130 may receive front-of-vehicle image data, side-of-vehicle image data, rear-of-vehicle image data, and obstacle-around-vehicle distance information from a camera 195 or lidar (not shown), and may transmit the received information to the signal processing device 170.

. The memory 140 may store various data necessary for overall operation of the display apparatus 100 for vehicles, such as programs for processing or control of the signal processing device 170.

. For example, the memory 140 may store data about the hypervisor, the server virtual machine 520, and the plurality of guest virtual machines which are to be executed in the processor 175.

. The audio output device 185 may convert an electrical signal from the signal processing device 170 into an audio signal, and may output the audio signal. To this end, the audio output device 185 may include a speaker and the like.

. The power supply 190 may supply power necessary to operate components under control of the signal processing device 170. In particular, the power supply 190 may receive power from a battery in the vehicle.

. The image projection device 180h includes an optical device (not shown) for image projection and may be controlled by the signal processing device 170 to output an augmented reality-based object.

. For example, the image projection device 180h may output vehicle speed information, vehicle heading direction information, a preceding vehicle object, an indicator of a distance to the preceding vehicle, and the like.

. In another example, the image projection device 180h may output an augmented reality lane carpet corresponding to a lane image, an augmented reality route carpet, or an augmented reality dynamic carpet.

. The signal processing device 170 may control the overall operation of each unit in the vehicle display apparatus 100.

. For example, the signal processing device 170 may include the shared memory 508 and the processor 175 configured to perform signal processing for the displays 180a and 180b.

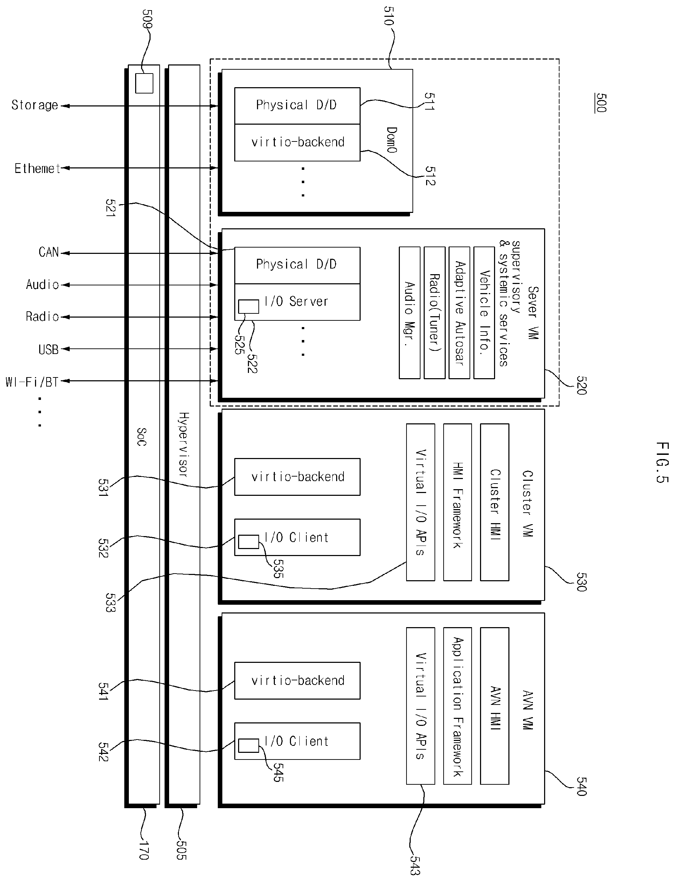

. The processor 175 may execute the hypervisor 505 (see FIG. 5), and may execute the server virtual machine 520 and the plurality of guest virtual machines 530 and 540 on the hypervisor 505 that runs (see FIG. 5).

. In this case, the first guest virtual machine 530 may operate for the first display 180a, and the second guest virtual machine 540 may operate for the second display 180b.

. For example, the server virtual machine 520 in the processor 715 may receive, process, and output vehicle sensor data, position information data, camera image data, audio data, or touch input data. Data processing may be efficiently performed by separating data processed only by a legacy virtual machine and data processed by the server virtual machine 520. In particular, the server virtual machine 520 may process most of the data, thereby allowing 1:N data sharing.

. In another example, the server virtual machine 520 may directly receive and process CAN communication data, audio data, radio data, USB data, and wireless communication data for the first and second guest virtual machines 530 and 540.

. Further, the server virtual machine 520 may transmit the processed data to the first and second guest virtual machines 530 and 540.

. Accordingly, among the server virtual machine 520 and the plurality of guest virtual machines 530 and 540, only the server virtual machine 520 may receive communication data and external input data and may perform signal processing, whereby load in signal processing by the other virtual machines may be reduced and 1:N data communication may be achieved, and therefore synchronization at the time of data sharing may be achieved.

. Meanwhile, the server virtual machine 520 may be configured to write data in the shared memory 508, whereby the first guest virtual machine 530 and the second guest virtual machine 540 share identical data.

. For example, the server virtual machine 520 may be configured to write vehicle sensor data, the position information data, the camera image data, or the touch input data in the shared memory 508, whereby the first guest virtual machine 530 and the second guest virtual machine 540 share identical data. Accordingly, 1:N data sharing may be achieved.

. As a result, the server virtual machine 520 may process most of the data, thereby allowing 1:N data sharing.

. Meanwhile, the server virtual machine 520 in the processor 175 may be configured to set up the shared memory 508 based on the hypervisor 505 for transmission of identical data to the first guest virtual machine 530 and the second guest virtual machine 540.

. That is, the server virtual machine 520 in the processor 175 may transmit identical data to the first guest virtual machine 530 and the second guest virtual machine 540 in a synchronized manner by using the shared memory 508 based on the hypervisor 505. Accordingly, the plurality of displays 180a and 180b in the vehicle may display identical images in a synchronized manner.

. Meanwhile, the signal processing device 170 may process various signals, such as an audio signal, an image signal, and a data signal. To this end, the signal processing device 170 may be implemented in the form of a system on chip (SOC).

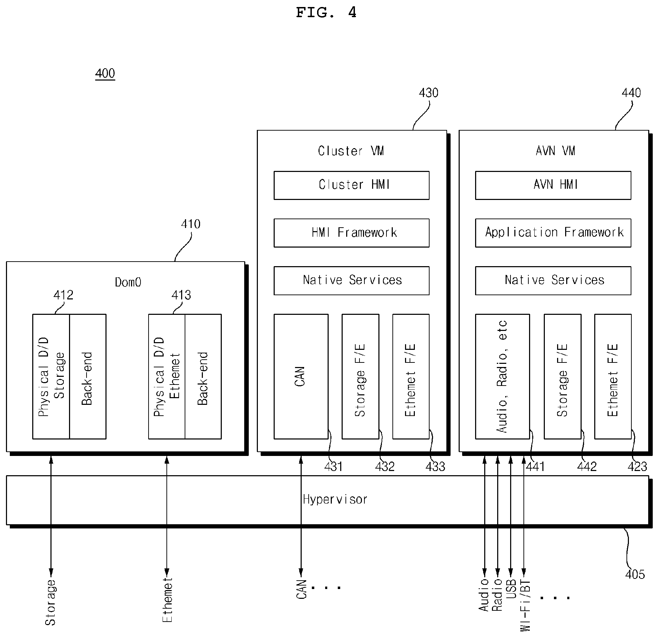

. FIG. 4 is a view showing a system driven in a signal processing device related to the present disclosure.

. Referring to the figure, FIG. 4 is a view illustrating that virtual machines are used for the cluster display 180a and the AVN display 180b.

. The system 400 driven in the signal processing device of FIG. 4 illustrates that a cluster virtual machine 430 and an AVN virtual machine 440 are executed through a hypervisor 405 in the processor 175.

. Meanwhile, the system 400 driven in the signal processing device of FIG. 4 illustrates that a legacy virtual machine 410 is also executed on the hypervisor 405 in the processor 175.

. The legacy virtual machine 410 may include an interface 412 for data communication with the memory 140 and an interface 413 for Ethernet communication.

. Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

. Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

. In the system 400, there is a disadvantage in that CAN communication data are input and output only in the cluster virtual machine 430, whereby the CAN communication data cannot be utilized in the AVN virtual machine 440.

. Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

. Meanwhile, there is a drawback in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

. Therefore, the present disclosure proposes a scheme for improving the system of FIG. 4. That is, unlike FIG. 4, virtual machines are divided into the server virtual machine 520 and the guest virtual machines such that various memory data, communication data, and the like are input and output in the server virtual machine 520, instead of the guest virtual machines, which will be described below with reference to FIG. 5 and subsequent figures.

. FIG. 5 is a view showing an example of a system running on a signal processing device according to an embodiment of the present disclosure.

. Referring to the figure, a system 500 of FIG. 5 is illustrated in which the server virtual machine 520, which is a server virtual machine, and the first guest virtual machine 530 and the second guest virtual machine 540, which are guest virtual machines, are executed on the hypervisor 505 in the processor 175 of the signal processing device 170.

. The first guest virtual machine 530 may be a virtual machine for the cluster display 180a, and the second guest virtual machine 540 may be a virtual machine for the AVN display 180b.

. That is, the first guest virtual machine 530 and the second guest virtual machine 540 may be operated for image rendering of the cluster display 180a and the AVN display 180b, respectively.

. Meanwhile, it is also illustrated that in the system 500 running on the signal processing device 170 of FIG. 5, a legacy virtual machine 510 is also executed on the hypervisor 505 in the processor 175.

. The legacy virtual machine 510 may include an interface 511 for data communication and Ethernet communication with the memory 140.

. Meanwhile, the legacy virtual machine 510 may further include a virtio-backend interface 512 for data communication with the first and second guest virtual machines 530 and 540.

. The server virtual machine 520 may include an interface 521 for input and output of audio data, radio data, USB data, and wireless communication data, and an input and output server interface 522 for data communication with the guest virtual machines.

. That is, the server virtual machine 520, which is a server virtual machine, may provide inputs/outputs (I/O) difficult to virtualize with standard virtualization technology (VirtIO) to a plurality of guest virtual machines, e.g., the first and second guest virtual machines 530 and 540.

. Meanwhile, the server virtual machine 520, which is a server virtual machine, may control radio data and audio data at a supervisor level, and may provide the data to a plurality of guest virtual machines, e.g., the first and second guest virtual machines 530 and 540, and the like.

. Meanwhile, the server virtual machine 520, which is a server virtual machine, may process vehicle data, sensor data, and surroundings-of-vehicle information, and may provide the processed data or information to a plurality of guest virtual machines, e.g., the first and second guest virtual machines 530 and 540, and the like.

. Meanwhile, the server virtual machine 520 may provide supervisory services, such as processing of vehicle data and audio routing management, and the like.

. Next, the first guest virtual machine 530 may include an input and output client interface 532 for data communication with the server virtual machine 520 and APIs 533 configured to control the input and output client interface 532.

. In addition, the first guest virtual machine 530 may include a virtio-backend interface for data communication with the legacy virtual machine 510.

. The first guest virtual machine 530 may receive memory data by communication with the memory 140 and Ethernet data by Ethernet communication from the virtio-backend interface 512 of the legacy virtual machine 510 through the virtio-backend interface.

. Next, the second guest virtual machine 540 may include an input and output client interface 542 for data communication with the server virtual machine 520 and APIs 543 configured to control the input and output client interface 542.

. In addition, the second guest virtual machine 540 may include a virtio-backend interface for data communication with the legacy virtual machine 510.

. The second guest virtual machine 540 may receive memory data by communication with the memory 140 and Ethernet data by Ethernet communication from the virtio-backend interface 512 of the legacy virtual machine 510 through the virtio-backend interface.

. Meanwhile, unlike FIG. 5, the legacy virtual machine 510 may be provided in the server virtual machine 520.

. In the system 500, CAN communication data, such as sensing data, are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

. Also, in the system 500 of FIG. 5, audio data, radio data, USB data, and wireless communication data are input and output only in the server virtual machine 520, but may be provided to a plurality of guest virtual machines, e.g., the first and second guest virtual machines 530 and 540, etc., through data processing in the server virtual machine 520. Accordingly, 1:N data communication by processing of the server virtual machine 520 may be achieved.

. Meanwhile, in the system 500 of FIG. 5, the first and second guest virtual machines 530 and 540 may operate on different operating systems.

. For example, the first guest virtual machine 540 may operate on Linux OS, and the second guest virtual machine 540 may operate on a Web-based OS.

. In the server virtual machine 520, the shared memory 508 based on the hypervisor 505 is set up for data sharing even when the first and second guest virtual machines 530 and 540 operate on different operating systems. Accordingly, even when the first and second guest virtual machines 530 and 540 operate on different operating systems, identical data or identical images may be shared in a synchronized manner. As a result, the plurality of displays 180a and 180b may display identical data or identical images in a synchronized manner.

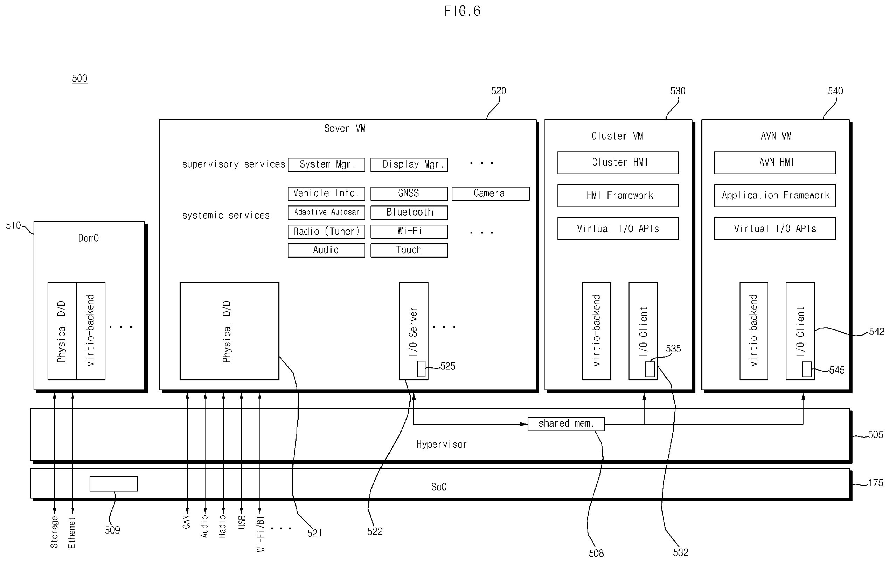

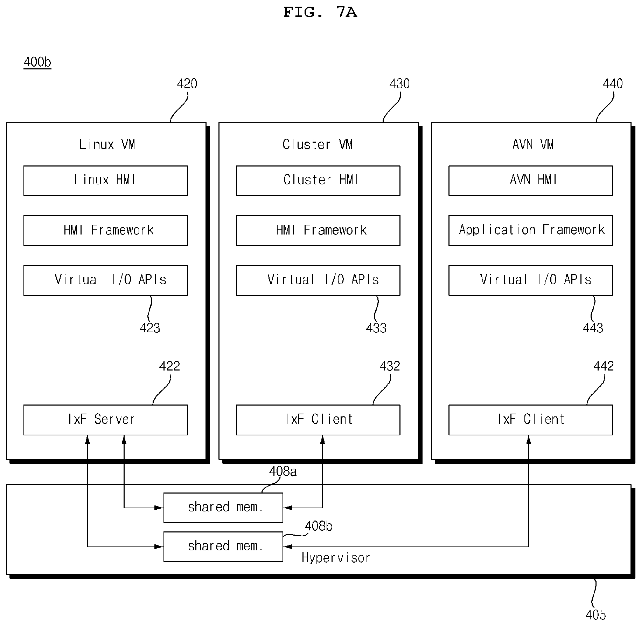

. FIG. 6 is a diagram referred to in the description of operation of a system running on a signal processing device according to the embodiment of the present disclosure, and FIGS. 7A to 9D are diagrams referred to in the description of FIG. 5 or FIG. 6.

. First, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may be configured to set up the shared memory 508 based on the hypervisor 505 for data transmission to the first and second guest virtual machines 530 and 540.

. For example, as an example of identical data, identical image data may be transmitted from the server virtual machine 520 to the first guest virtual machine 530 and the second guest virtual machine 540. Accordingly, the plurality of displays 180a and 180b in the vehicle may display identical images in a synchronized manner.

. Meanwhile, in the system 500 of FIG. 6, the processor 175 in the signal processing device 170 executes the server virtual machine 520 and the plurality of guest virtual machines 530 and 540 on the hypervisor 505 in the processor 175, and the server virtual machine 520 in the processor 175 may transmit identical data to the first and second guest virtual machines 530 and 540 in a synchronized manner by using the shared memory 508 based on the hypervisor 505.

. For example, examples of identical data may include CAN communication data, audio data, radio data, USB data, wireless communication data, position information data, or touch data, and the like. Accordingly, the plurality of displays 180a and 180b in the vehicle may display identical data in a synchronized manner.

. Meanwhile, the server virtual machine 520 in the processor 175 may receive and process position information data that changes according to movement, and may provide the processed data to the first guest virtual machine 530 or the second guest virtual machine 540. Accordingly, instead of 1:1 data communication, 1:N data communication between the virtual machines may be achieved by using the shared memory.

. Meanwhile, the first guest virtual machine 530 and the second guest virtual machine 540 may be driven by different operating systems. Accordingly, even when the plurality of virtual machines are driven by different operating systems, high-speed data communication may be performed.

. Meanwhile, although not illustrated in FIG. 6, the legacy virtual machine 510 may transmit memory data from the memory 140 and Ethernet data by Ethernet communication to the first guest virtual machine 530 and the second guest virtual machines 540 in a synchronized manner by using the shared memory 508 based on the hypervisor 505. That is, 1:N data communication of the memory data or the Ethernet data may be performed. Accordingly, identical data may be transmitted in a synchronized manner.

. Meanwhile, the server virtual machine 520 in the processor 175 may execute supervisory services, such as a system manager, a display manager, and the like.

. Meanwhile, the server virtual machine 520 in the processor 175 may execute systemic services, such as vehicle information service, position information service, camera service, AUTOSAR, Bluetooth communication service, radio service, Wi-Fi service, audio service, touch service, and the like.

. FIG. 7A is a diagram illustrating an example of three virtual machines 420, 420, and 430 operating on a system 400b of FIG. 4.

. Referring to the figure, the server virtual machine 520 and 420 is a Linux-based virtual machine, and may include an input and output server interface 422 for data transmission, and the first guest virtual machine 530 and the second guest virtual machine 540 may include input and output client interfaces 432 and 552 for data communication with the input and output server interface 422.

. For example, the server virtual machine 520 and 420 is required to set up a first shared memory 408a in a hypervisor 405 in order to transmit first data to the first guest virtual machine 430, and to set up a separate second shared memory 408b, different from the first shared memory 408a, in the hypervisor 405 in order to transmit the same first data to the second guest virtual machine 440.

. If a separate shared memory is used for transmitting the same first data as illustrated in FIG. 7A, there is a drawback in that resources are wasted and synchronization is not easy.

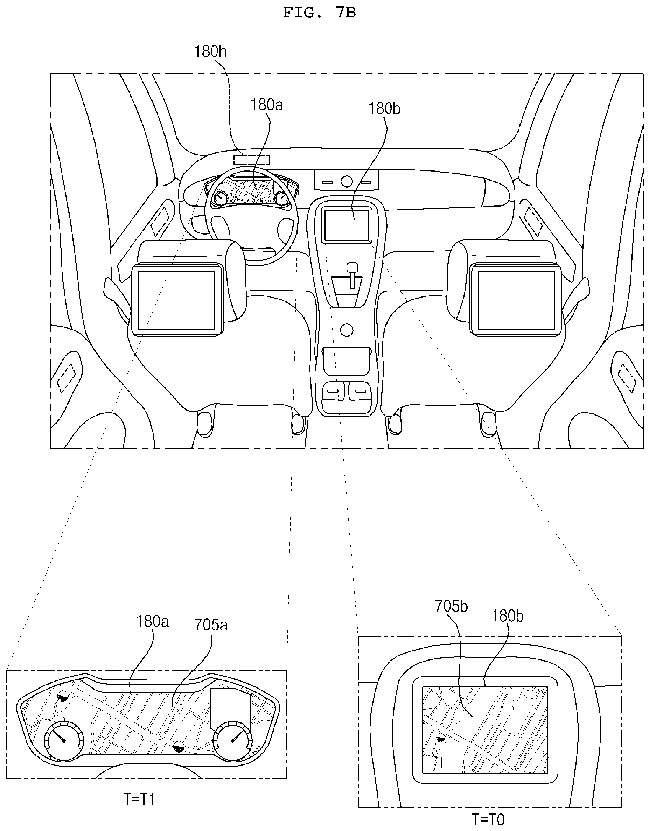

. FIG. 7B illustrates an example in which, by the system 400b of FIG. 7A, the first guest virtual machine 430 displays image data received through the first shared memory 408a on the first display 180a, and the second guest virtual machine 440 displays image data received through the second shared memory 408b on the second display 180b.

. FIG. 7B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

. As described above, if the first virtual machine 520 and 420 transmits identical image data based on the separate shared memory as illustrated in FIG. 7A, there is a drawback in that images may not be displayed in a synchronized manner as illustrated in FIG. 7B.

. In order to solve this problem, the present disclosure proposes a scheme for allocating a single shared memory at the time of transmission of identical data. Consequently, 1:N data communication is performed, whereby synchronized data transmission is achieved.

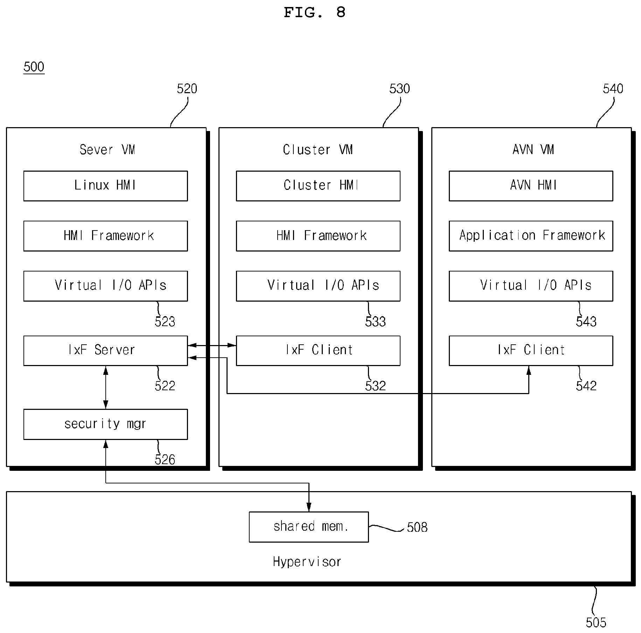

. FIG. 8 is a diagram illustrating an example in which the server virtual machine 520 and the plurality of guest virtual machines 530 and 540 are executed on the hypervisor 505 in the processor 175 of the system 500, and the server virtual machine 520 in the processor 175 may be configured to set up the shared memory 508 based on the hypervisor 505 for transmission of identical data to the first guest virtual machine 530 and the second guest virtual machine 540.

. Accordingly, the plurality of displays 180a and 180b in the vehicle may display identical images in a synchronized manner.

. Meanwhile, high-speed data communication may be performed among the plurality of virtual machines 520, 530, and 540. Further, high-speed data communication may be performed even when the plurality of virtual machines 520, 530, and 540 are driven by different operating systems.

. Meanwhile, the server virtual machine 520 in the processor 175 may transmit data, processed by the server virtual machine 520, to another virtual machine by using a single shared memory 508 instead of allocating memories, the number of which corresponds to the number of virtual machines. Accordingly, instead of 1:1 data communication, 1:N data communication between the virtual machines may be achieved by using the shared memory 508.

. Meanwhile, the server virtual machine 520 in the processor 175 may include the input and output server interface 522 and a security manager 526.

. Meanwhile, the first guest virtual machine 530 and the second guest virtual machine 540 may include input and output client interfaces 532 and 542, respectively. Accordingly, high-speed data communication between the plurality of virtual machines may be performed by using the input and output server interface 522 and the input and output client interfaces 532 and 542.

. The input and output server interface 522 in the first virtual machine 520 may receive requests for transmission of identical data from the respective input and output client interfaces 532 and 542 in the first guest virtual machine 530 and the second guest virtual machine 540, and may transmit shared data to the shared memory 508 through the security manager 526 based thereon.

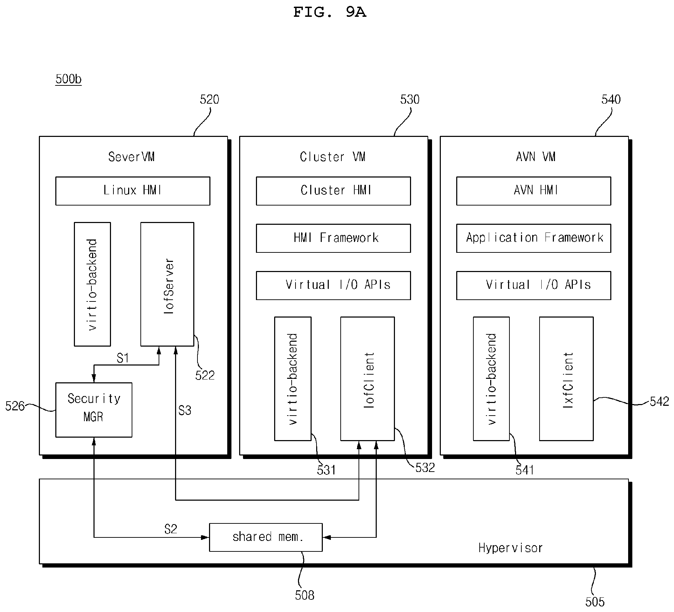

. FIG. 9A is a diagram illustrating in further detail transmission of shared data.

. Referring to the figure, in order to transmit shared data, the input and output server interface 522 in the server virtual machine 520 transmits a request for allocation of the shared memory 508 to the security manager 526 (S1).

. Subsequently, the security manager 526 may allocate the shared memory 508 using the hypervisor 505 (S2), and may write shared data in the shared memory 508.

. Meanwhile, the input and output client interfaces 532 and 542 may transmit a request for connection to the input and output server interface 522 after allocation of the shared memory 508 (S3).

. Meanwhile, after allocation of the shared memory 508, the input and output server interface 522 transmits information regarding the shared memory 508 including key data to the input and output client interfaces 532 and 542 (S4). In this case, the key data may be data for data access.

. That is, after setting up the shared memory 508, the server virtual machine 520 in the processor 175 may transmit information regarding the shared memory 508 to the first guest virtual machine 530 and the second guest virtual machine 540.

. The input and output client interfaces 532 and 542 may access the shared memory 508 based on the received key data (S5), and may copy the shared data from the shared memory 508.

. Accordingly, the first guest virtual machine 530 and the second guest virtual machine 540 may access the shared memory 508, and thus, may share the shared data.

. For example, in the case in which the shared data are image data, the first guest virtual machine 530 and the second guest virtual machine 540 may share the image data, and thus, the plurality of displays 180a and 180b in the vehicle may display the same shared image in a synchronized manner.

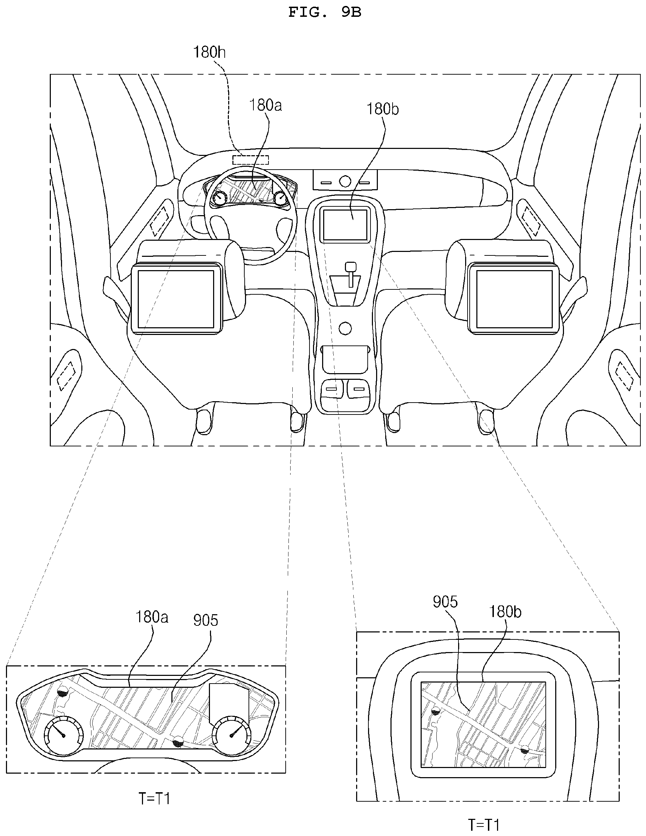

. FIG. 9B illustrates an example in which, by the system 500 of FIG. 9A, the first guest virtual machine 530 displays image data received through the shared memory 508 on the first display 180a, and the second guest virtual machine 540 displays image data received through the shared memory 508 on the second display 180b.

. FIG. 9B illustrates that an image 905 displayed on the first display 180a and an image 905 displayed on the second display 180b are synchronized, such that the same image may be displayed.

. That is, image data processed by the server virtual machine 520 in the processor 175 are transmitted to the first guest virtual machine 530 and the second guest virtual machine 540 through the shared memory 508, and based on the image data, a first image 905 displayed on the first display 180a and a second image 905 displayed on the second display 180b may be identical to each other. Accordingly, the plurality of displays 180a and 180b in the vehicle may display the same images in a synchronized manner. Further, high-speed data communication among the plurality of virtual machines 520, 530, and 540 may be performed.

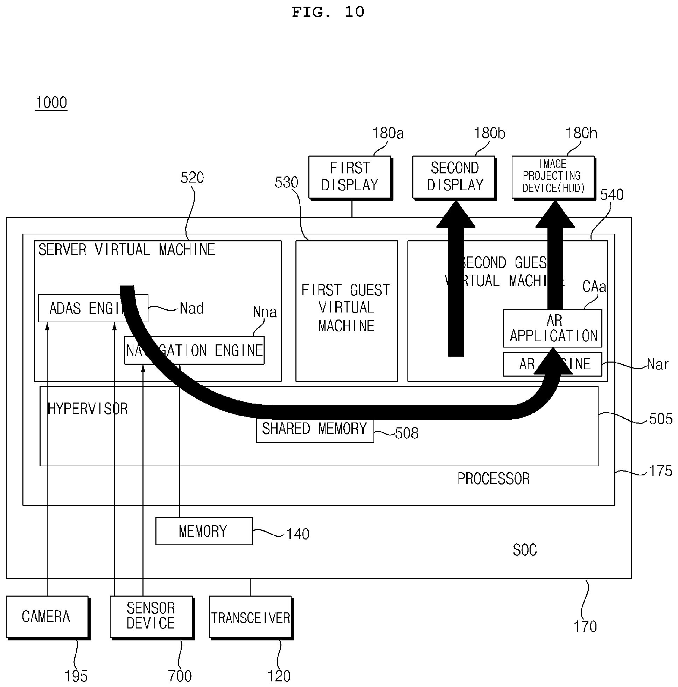

. FIG. 10 is an exemplary internal block diagram illustrating a signal processing device according to an embodiment of the present disclosure.

. Referring to FIG. 10, a vehicle display apparatus 1000 according to the embodiment of the present disclosure may include a plurality of displays 180a and 180b, an image projection device 180h, and a signal processing device 170.

. Meanwhile, the vehicle display apparatus 1000 according to the embodiment of the present disclosure may further include a camera 195, a sensor device 700, and a transceiver 120.

. Meanwhile, the signal processing device 170 according to the embodiment of the present disclosure may receive a signal from the camera 195, the sensor device 700, or the transceiver 120, and may perform signal processing to output an image signal to a first display 180a or a second display 180b or the image projection device 180h.

. The signal processing device 170 according to the embodiment of the present disclosure may include a memory 140 configured to store map data, and a processor 175 configured to generate a graphical overlay based on camera data from the camera 195, or the map data, or sensor data from the sensor device 700.

. Meanwhile, the processor 175 may execute a plurality of virtual machines 520 to 540 on an executed hypervisor 505, and may generate a first graphical overlay 1210 through a first augmented reality engine Nara executed in one of the plurality of virtual machines 520 to 540 or generate a second graphical overlay 1220, including less data than the first graphical overlay 1210, through a second augmented reality engine Narb executed in some of the plurality of virtual machines 520 to 540, in which when the first augmented reality engine Nara is stopped, the processor 175 may output the second graphical overlay 1220 instead of the first graphical overlay 1210.

. Accordingly, an augmented reality-based overlay may be stably provided. Particularly, the augmented reality-based overlay may be stably provided even when the first augmented reality engine Nara is stopped.

. In this case, the graphical overlay may include vehicle speed information, vehicle heading direction information, a preceding vehicle object, an indicator of a distance to the preceding vehicle, and the like.

. Accordingly, safety information and the like for a driver during vehicle driving may be stably provided.

. Meanwhile, an augmented reality (AR) apparatus 1005 for a vehicle (hereinafter referred to as an in-vehicle augmented reality apparatus) may include at least one camera 195, an image projection device 180h configured to project forward an image, and a processor 175 configured to generate a graphical overlay.

. Meanwhile, as described above, the processor 175 may execute the hypervisor 505, and may set the shared memory 508 based on the executed hypervisor 505.

. Meanwhile, the processor 175 may execute an Advanced Driver Assistance System (ADAS) engine Nad based on the camera data from the camera 195 and the sensor data from the sensor device 700.

. By executing the ADAS engine Nad, the processor 175 may detect objects at the front, rear, and sides of the vehicle.

. Particularly, by executing the ADAS engine Nad, the processor 175 may detect a preceding vehicle object or a lane object in front of the vehicle.

. Meanwhile, the processor 175 may execute a navigation engine Nna based on the sensor data from the sensor device 700 and the map data from the memory 140.

. By executing the navigation engine Nna, the processor 175 may generate guide information related to vehicle traveling and the like.

. Particularly, by executing the navigation engine Nna, the processor 175 may generate guide information related to vehicle traveling.

. In this case, the guide information related to vehicle traveling may include vehicle speed information and vehicle heading direction information.

. Meanwhile, the processor 175 may execute at least one of the first augmented reality engine Nara or the second augmented reality engine Narb based on the camera data from the camera 195, or the map data from the memory 140, or the sensor data from the sensor device 700.

. Specifically, by executing at least one of the first augmented reality engine Nara or the second augmented reality engine Narb based on the camera data from the camera 195, or the map data from the memory 140, or the sensor data from the sensor device 700, the processor 175 may generate a graphical overlay including vehicle speed information, vehicle heading direction information, a preceding vehicle object, or an indicator of a distance to the preceding vehicle.

. Meanwhile, by executing at least one of the first augmented reality engine Nara or the second augmented reality engine Narb, the processor 175 may detect a preceding vehicle object or a lane object in front of the vehicle, and the like.

. Meanwhile, the processor 175 may execute an AR application CAa for the first display 180a, the second display 180b, or the image projection device 180h.

. Particularly, the processor 175 may execute the AR application CAa for the image projection device 180h.

. In the drawing, an example is illustrated in which the processor 175 executes the plurality of virtual machines 520 to 540 on the hypervisor 505, and among the plurality of virtual machines 520 to 540, a first guest virtual machine 530 operates for the first display 180a and a second guest virtual machine 540 operates for the second display 180b or the image projection device 180h.

. Meanwhile, the second guest virtual machine 540 may execute the AR application CAa and the first augmented reality engine Nara.

. Meanwhile, a server virtual machine 520 may execute the second augmented reality engine Narb, a navigation engine Nna, and an ADAS engine Nad.

. Meanwhile, when the first augmented reality engine Nara is stopped, the processor 175 may execute the second augmented reality engine Narb to generate and output the second graphical overlay 1220. Accordingly, the augmented reality-based second graphical overlay 1220 may be rapidly provided.

. Meanwhile, when the first augmented reality engine Nara is stopped, the second augmented reality engine Narb may transmit data related to the first graphical overlay 1210 to the second augmented reality engine Narb by using the hypervisor 505. Accordingly, the augmented reality-based second graphical overlay 1220 may be rapidly provided.

. Meanwhile, when the first augmented reality engine Nara is restored, the second augmented reality engine Narb may transmit data related to the second graphical overlay 1220 to the first augmented reality engine Nara by using the hypervisor 505. Accordingly, the augmented reality-based first graphical overlay 1210 may be rapidly provided.

. Meanwhile, when the first augmented reality engine Nara is restored, the second augmented reality engine Narb may transmit data related to the second graphical overlay 1220 to the first augmented reality engine Nara by using the shared memory 508 or an input/output (I/O) resource manager 1010 based on the hypervisor 505. Accordingly, the augmented reality-based first graphical overlay 1210 may be rapidly provided.

. For example, when the first augmented reality engine Nara is restored, the second augmented reality engine Narb may transmit data related to the second graphical overlay 1220 to the first augmented reality engine Nara through the input and output resource manager 1010 based on the hypervisor 505.

. Meanwhile, the input and output resource manager 1010 may receive the camera data from the camera 195, or the map data from the memory 140, or the sensor data from the sensor device 700, and may provide the received data to the first augmented reality engine Nara or the second augmented reality engine Narb.

. Particularly, the input and output resource manager 1010 may temporarily store latest data of the camera data from the camera 195, or the map data from the memory 140, or the sensor data from the sensor device 700, and may provide the stored data to the first augmented reality engine Nara or the second augmented reality engine Narb.

. Meanwhile, a system monitor 1020 may detect interruption of the first augmented reality engine Nara or may detect restoration of the first augmented reality engine Nara.

. For example, the system monitor 1020 may transmit a heartbeat signal to the first augmented reality engine Nara, and upon failing to receive a response signal from the first augmented reality engine Nara within a predetermined period of time, the system monitor 1020 may determine that the operation of the first augmented reality engine Nara is stopped.

. In another example, while the operation of the first augmented reality engine Nara is stopped, if the system monitor 1020 transmits a heartbeat signal to the first augmented reality engine Nara and receives a response signal from the first augmented reality engine Nara within a predetermined period of time, the system monitor 1020 may determine that the operation of the first augmented reality engine Nara is restored.

. Meanwhile, in the case in which the system monitor 1020 executed in the hypervisor 505 detects interruption of the first augmented reality engine Nara, the second augmented reality engine Narb may generate and output the second graphical overlay 1220 through the input and output resource manager 1010 based on the hypervisor 505.

. Meanwhile, in the case in which the system monitor 1020 executed in the hypervisor 505 detects restoration of the first augmented reality engine Nara, the second augmented reality engine Narb may transmit data related to the second graphical overlay 1220 to the first augmented reality engine Nara through the input and output resource manager 1010.

. Accordingly, the augmented reality-based first graphical overlay 1210 or second graphical overlay 1220 may be rapidly provided.

. Meanwhile, the first augmented reality engine Nara, the second augmented reality engine Narb, the ADAS engine Nad, the navigation engine Nna may be referred to as a first augmented reality processor Nara, a second augmented reality processor Narb, an ADAS processor Nad, and a navigation processor Nna, respectively.

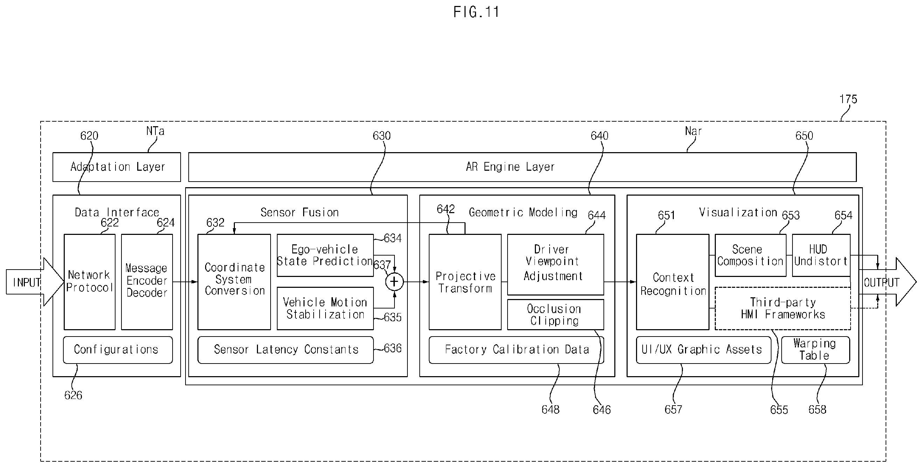

. FIG. 11 is an exemplary internal block diagram illustrating the processor of FIG. 10.

. Referring to FIG. 11, the processor 175 may include a data interface NTa configured to receive camera data from the camera 195, or map data from the memory 140, or sensor data from the sensor device 700, and an augmented reality (AR) engine Nar configured to generate an augmented reality-based overlay based on the image from the camera 195 and to output the generated augmented reality-based overlay.

. The AR engine Nar may include the first augmented reality engine Nara and the second augmented reality engine Narb, as illustrated in FIG. 10.

. Meanwhile, the AR engine Nar may execute sensor fusion based on the camera data from the camera 195, or the map data, or the sensor data from the sensor device 700, and may perform geometric modeling based on a result of performing the sensor fusion, and may perform visualization based on a result of the modeling.

. To this end, the AR engine Nar may include a sensor fusion processor 630, a geometric modeling processor 640, and a visualization processor 650.

. A Network Protocol block 622 in the data interface NTa may implement network protocols of various vehicle sensor data transmitted to the AR engine Nar. In this case, the network protocols may be protocols such as SOME/IP, CAN, Ethernet, and the like.

. A Message Encoder/Decoder 624 in the data interface NTa may decode encoded binary packets, which are regularly received from the sensor device 700 or a gateway (not shown), and may extract a numeric value which is an original message value.

. Meanwhile, a Message Encoder/Decoder 624 in the data interface NTa may add a timestamp of the received time to the decoded data, and may transmit the data, having the timestamp added thereto, to the sensor fusion processor 630.

. A Configurations block 626 in the data interface NTa may manage a life cycle of the AR application CAa, may set which window will display AR content, or may manage a window system, an event-driven configuration setting message, or an AR function ON/OFF configuration setting, or may turn on or off augmented reality-based graphical overlays, or may manage a Light/Dark Mode of a graphical user interface, or may change a color tone of an augmented reality lane carpet.

. The sensor fusion processor 630 receives decoded, Time-tagged sensor data from the data interface NTa.

. A Coordinate System Conversion Block 632 in the sensor fusion processor 630 transforms coordinates of all input sensor messages into a vehicle reference coordinate system by using a transformation matrix.

. An Ego-vehicle State Prediction Block 634 in the sensor fusion processor 630 may compensate for latency in each sensor data.

. To this end, the Ego-vehicle State Prediction Block 634 in the sensor fusion processor 630 may remove noise from time-series sensor data and perform Kalman filtering and the like.

. A Vehicle Motion Stabilization Block 635 in the sensor fusion processor 630 may compensate for vehicle motion caused by uneven surfaces on the road and vehicle suspension.

. Meanwhile, a Sensor Latency Constants Block 637 in the sensor fusion processor 630 may transmit center of gravity position offset data from the vehicle reference coordinate system to the Vehicle Motion Stabilization Block.

. Meanwhile, result data of the Ego-vehicle State Prediction Block 634 and result data of the Vehicle Motion Stabilization Block 635 may be summed together by an adder 637 to be output to the geometric modeling processor 640.

. A projective transform Block 642 in the geometric modeling processor 640 receives the result data from the sensor fusion processor 630 and performs transformation for image projection.

. A driver viewpoint adjustment Block 644 in the geometric modeling processor 640 may detect the position of a driver's eyes based on an image from an in-vehicle camera, and may adjust a projection position based on the position of the eyes.

. Meanwhile, an occlusion clipping Block 646 in the geometric modeling processor 640 may perform clipping on the projected image.

. A factory calibration data Block 646 in the geometric modeling processor 640 may provide calibration data to the projective transform Block 642 or the river viewpoint adjustment Block 644, or the occlusion clipping Block 646.

. The visualization processor 650 may receive the result data from the geometric modeling processor 640, and may output various images based on augmented reality.

. A context recognition Block 651 in the visualization processor 650 may receive the result data from the geometric modeling processor 640, and may perform context recognition.

. A scene composition Block 653 in the visualization processor 650 may perform scene composition based on the data from the context recognition Block 651.

. A HUD undistort Block 654 in the visualization processor 650 may receive image data, which is signal-processed data with reduced distortion, from the scene composition Block 653.

. A Third-party HMI frameworks Block 655 in the visualization processor 650 may add framework data to the data from the context recognition Block 651, and may output the added data.

. A UI/UX graphic assets Block 657 in the visualization processor 650 may provide data for UI/UX of the output image data.

. A Warping table Block 659 in the visualization processor 650 may provide Warping table data to units in the visualization processor 650.

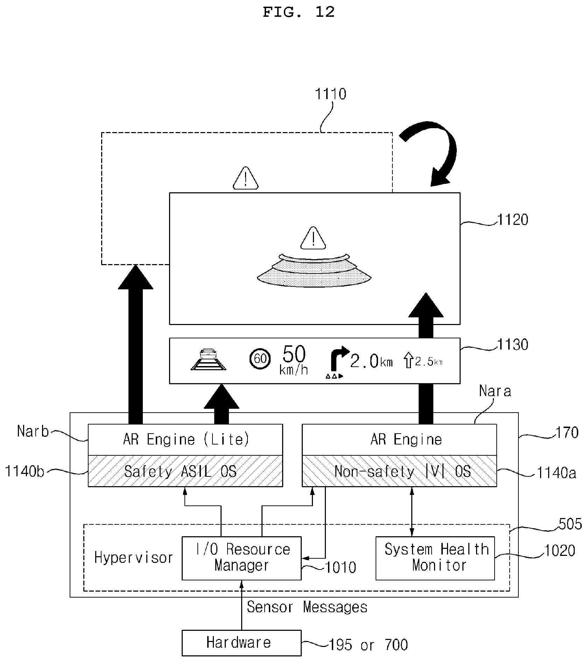

. FIGS. 12 to 14B are diagrams referred to in the description of FIG. 10.

. FIG. 12 is a diagram explaining an internal operation of the signal processing device of FIG. 10.

. Referring to FIG. 12, the processor 175 in the signal processing device 170 may execute a first augmented reality engine Nara on a first operating system 1140a, and may execute a second augmented reality engine Narb on a second operating system 1140b different from the first operating system 1140a.

. For example, the processor 175 in the signal processing device 170 may execute the second guest virtual machine 540 based on the first operating system 1140a and execute the first augmented reality engine Nara on the first operating system 1140a, and may execute the server virtual machine 520 based on the second operating system 1140b and execute the second augmented reality engine Narb on the second operating system 1140b.

. Meanwhile, the first operating system 1140a may be a Non-safety IVI OS, and the second operating system 1140b may be a safety ASIL OS.

. Meanwhile, the second operating system 1140b may be a Lite version of the first augmented reality engine Nara.

. As described above, the first augmented reality engine Nara and the second augmented reality engine Narb are executed separately, such that when operation of the first augmented reality engine Nara is stopped unexpectedly, it is possible to rapidly restore the first augmented reality engine Nara by using the second augmented reality engine Narb. Accordingly, the augmented reality-based overlay may be stably and rapidly provided.

. Meanwhile, the input and output resource manager 1010 executed based on the hypervisor 505 may receive the camera data or the sensor data from the camera 195 or the sensor device 700, respectively, and may provide the camera data or the sensor data to the first augmented reality engine Nara or the second augmented reality engine Narb.

. Meanwhile, the system monitor 1020 executed based on the hypervisor 505 may detect interruption of the first augmented reality engine Nara or detect restoration of the first augmented reality engine Nara.

. For example, the system monitor 1020 may transmit a heartbeat signal to the first augmented reality engine Nara, and based on whether a response signal is received in response to the heartbeat signal, the system monitor 1020 may determine whether operation of the first augmented reality engine Nara is stopped or restored.

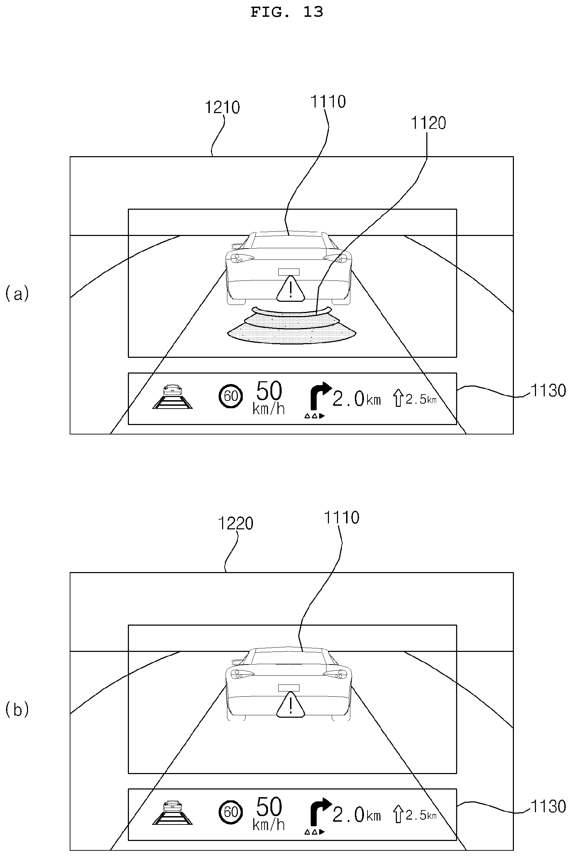

. FIG. 13 is a diagram illustrating an example of a first graphical overlay 1210 or a second graphical overlay 1220.

. Referring to FIG. 13, the first augmented reality engine Nara may generate and output the first graphical overlay 1210 having a first layer 1130, which includes vehicle speed information and vehicle heading direction information, and the second layer 1120 which includes a preceding vehicle object and an indicator of a distance to the preceding vehicle, as illustrated in (a) of FIG. 13.

. Meanwhile, the second augmented reality engine Narb may generate and output the second graphical overlay 1220 having the first layer 1130, which includes vehicle speed information and vehicle heading direction information, and a third layer 1110 which includes a preceding vehicle object, as illustrated in (b) of FIG. 13.

. In the second graphical overlay 1220, the indicator of the distance to the preceding vehicle is omitted, and thus includes less data than the first graphical overlay 1210.

. That is, the first graphical overlay 1210 may have the first layer 1130 and the second layer 1120, and the second graphical overlay 1220 may have the first layer 1130 and the third layer 1110 including less data than the second layer 1120.

. Accordingly, the augmented reality-based overlay may be stably provided even when the first augmented reality engine Nara is stopped.

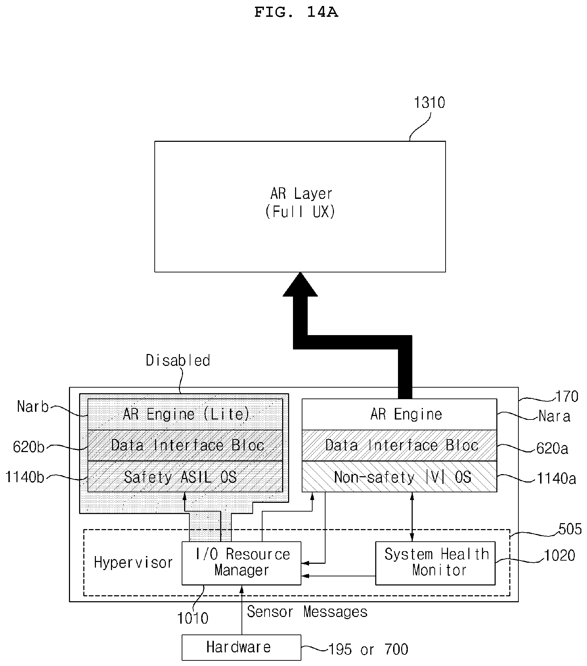

. FIG. 14A is a diagram illustrating an example of operation of the first augmented reality engine Nara in the signal processing device of FIG. 12.

. Referring to FIG. 14A, the processor 175 in the signal processing device 170 may execute a first data interface 620a on a first operating system 1140a, and may execute the first augmented reality engine Nara on the first data interface 620a.

. Meanwhile, the processor 175 in the signal processing device 170 may execute a second data interface 620b on a second operating system 1140b different from the first operating system 1140a, and may execute the second augmented reality engine Narb on the second data interface 620b.

. Meanwhile, the first data interface 620a or the second data interface 620b may transmit camera data from the camera 195, or map data from the memory 140, or sensor data from the sensor device 700 through the hypervisor 505 to the first augmented reality engine Nara or the second augmented reality engine Narb.

. Meanwhile, in the case in which the first augmented reality engine Nara operates normally, the processor 175 in the signal processing device 170 may control the second augmented reality engine Narb to be disabled.

. Accordingly, the first augmented reality engine Nara may generate and output the first graphical overlay 1210 having the first layer 1130, which includes vehicle speed information and vehicle heading direction information, and the second layer 1120 which includes a preceding vehicle object and an indicator of a distance to the preceding vehicle, as illustrated in (a) of FIG. 13.

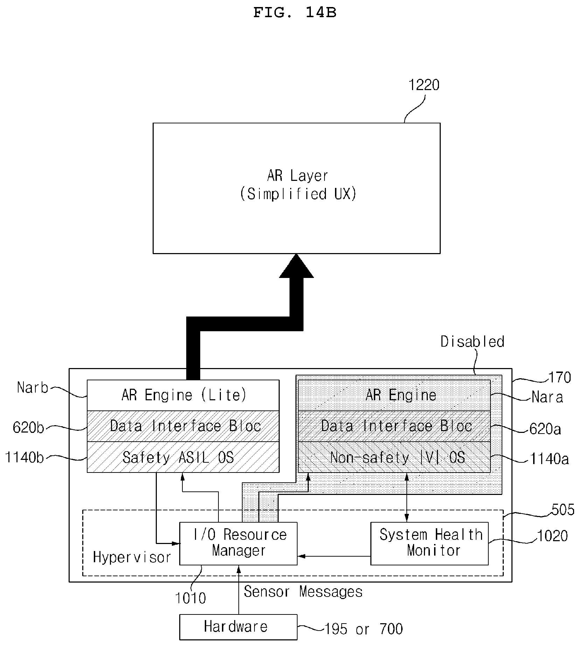

. FIG. 14B is a diagram illustrating an example of operation of the second augmented reality engine Narb in the signal processing device of FIG. 12.

. Referring to FIG. 14B, in the case in which operation of the first augmented reality engine Nara is stopped, the processor 175 in the signal processing device 170 may control the second augmented reality engine Narb to be activated and the first augmented reality engine Nara to be disabled.

. That is, the processor 175 in the signal processing device 170 may execute the first augmented reality engine Nara and the second augmented reality engine Narb, and when the first augmented reality engine Nara is stopped, the processor 175 may output the second graphical overlay 1220 instead of the first graphical overlay 1210.

. Accordingly, the second augmented reality engine Narb may generate and output the second graphical overlay 1220 having the first layer 1130, which includes vehicle speed information and vehicle heading direction information, and the third layer 1110 which includes a preceding vehicle object, as illustrated in (b) of FIG. 13.

. Meanwhile, in FIGS. 14A and 14B, an example is illustrated in which the first data interface 620a and the second data interface 620b are executed on the first operating system 1140a and the second operating system 1140b, respectively, but other operations are also possible.

. For example, unlike FIGS. 14A and 14B, the processor 175 in the signal processing device 170 may execute a data interface (not shown) based on the hypervisor 505, and the data interface (not shown) may transmit the camera data from the camera 195, or the map data from the memory 140, or the sensor data from the sensor device 700 through the input and output resource manager 1010 to the first augmented reality engine Nara and the second augmented reality engine Narb.

. As described above, unlike FIGS. 14A and 14B, by using a single data interface, the first augmented reality engine Nara and the second augmented reality engine Narb may operate together, and only the control authority may be assigned to one of the engines.

. That is, the first augmented reality engine Nara may be executed on the first operating system 1140a, the second augmented reality engine Narb may be executed on the second operating system 1140b different from the first operating system 1140a, the data interface may be executed based on the hypervisor 505, the first augmented reality engine Nara may be executed on the first operating system 1140a, and the second augmented reality engine Narb may be executed on the second operating system 1140b.

. Accordingly, an augmented reality-based overlay may be stably and rapidly provided under any circumstances.

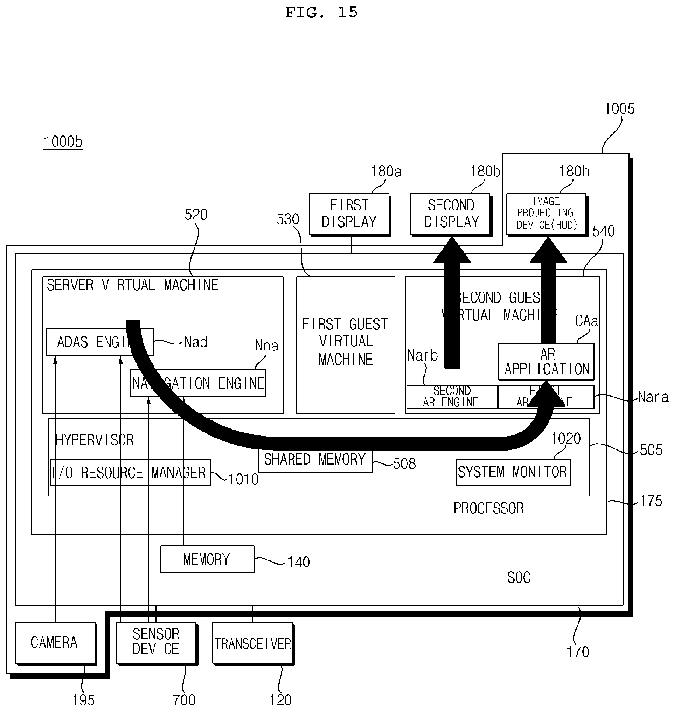

. FIG. 15 is a block diagram illustrating a signal processing device according to another embodiment of the present disclosure.

. Referring to FIG. 15, a vehicle display apparatus 1000b according to another embodiment of the present disclosure may include a plurality of displays 180a and 180b, an image projection device 180h, and a signal processing device 170.

. The signal processing device 170 according to another embodiment of the present disclosure may include a memory 140 configured to store map data, and a processor 175 configured to generate a graphical overlay based on camera data from the camera 195, or the map data, or sensor data from the sensor device 700.

. Meanwhile, the processor 175 may execute a plurality of virtual machines 520 to 540 on an executed hypervisor 505, and the second guest virtual machine 520 among the plurality of virtual machines 520 to 540 may execute the first augmented reality engine Nara, the second augmented reality engine Narb, and the AR application CAa, and the server virtual machine 520 may execute the ADAS engine Nad and the navigation engine Nna.

. Unlike FIG. 10, the second augmented reality engine Narb is executed in the second guest virtual machine 540 instead of the server virtual machine 520. Accordingly, the augmented reality-based overlay may be stably and rapidly provided.

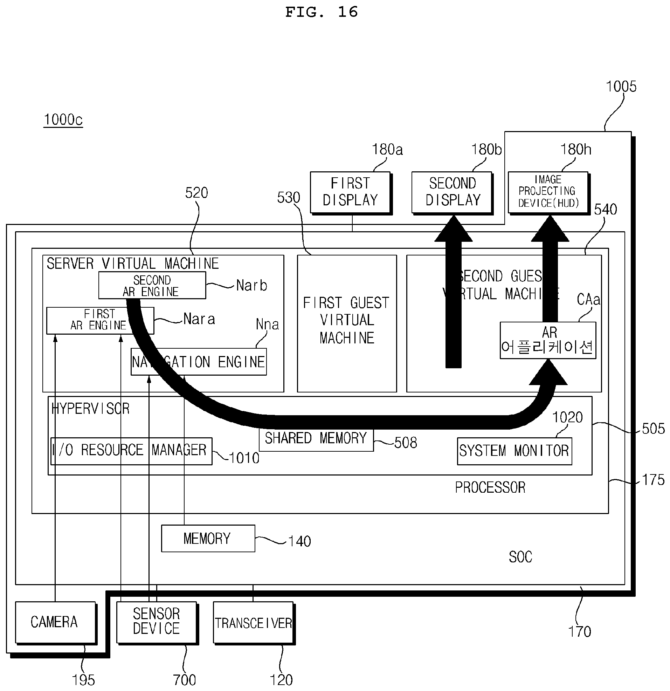

. FIG. 16 is a block diagram illustrating a signal processing device according to yet another embodiment of the present disclosure.

. Referring to FIG. 16, a vehicle display apparatus 1000c according to yet another embodiment of the present disclosure may include a plurality of displays 180a and 180b, an image projection device 180h, and a signal processing device 170.

. The signal processing device 170 according to yet another embodiment of the present disclosure may include a memory 140 configured to store map data, and a processor 175 configured to generate a graphical overlay based on camera data from the camera 195, or the map data, or sensor data from the sensor device 700.

. Meanwhile, the processor 175 may execute a plurality of virtual machines 520 to 540 on an executed hypervisor 505, and the server virtual machine 520 among the plurality of virtual machines 520 to 540 may execute the first augmented reality engine Nara, the second augmented reality engine Narb, and the navigation engine Nna, and the second guest virtual machine 540 may execute the AR application CAa.

. Unlike FIG. 10, the ADAS engine Nad may not be executed in the server virtual machine 520, and the function of the ADAS engine Nad may be executed in the first augmented reality engine Nara and the second augmented reality engine Narb which are executed in the server virtual machine 520. Accordingly, the augmented reality-based overlay may be stably and rapidly provided.

. Meanwhile, the in-vehicle augmented reality apparatus 1005 in FIGS. 10 to 16 may project a graphical overlay, generated by the signal processing device 170, onto the windshield through the image projection device 180h.

. Alternatively, the in-vehicle augmented reality apparatus 1005 in FIGS. 10 to 16 may project a graphical overlay, generated by the signal processing device 170, onto another display 180a or 180b through the image projection device 180h.

. Meanwhile, an example is illustrated in which the in-vehicle augmented reality apparatus 1005 in FIGS. 10 to 16 includes at least one camera 195, the image projection device 180h configured to project forward an image, and the signal processing device 170 including the processor 175 configured to generate a graphical overlay based on camera data from the camera 195, but unlike the example, various modifications may be made.

. For example, the in-vehicle augmented reality apparatus 1005 according to another embodiment of the present disclosure may include at least one camera 195, the signal processing device 170 including the processor 175 configured to generate a graphical overlay based on camera data from the camera 195, and an AR glass (not shown) configured to output a graphical overlay output from the signal processing device 170. That is, the in-vehicle augmented reality apparatus 1005 may include the AR glass (not shown) instead of the image projection device 180h.

. It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

**1.** A signal processing device comprising:
a memory configured to store map data; and
a processor configured to generate a graphical overlay based on camera data from a camera, the map data, or sensor data from a sensor device,
wherein the processor is configured to :
execute a plurality of virtual machines on an executed hypervisor,
generate a first graphical overlay through a first augmented reality engine executed in one of the plurality of virtual machines or generate a second graphical overlay, including less data than the first graphical overlay, through a second augmented reality engine executed in some of the plurality of virtual machines,
wherein in response to the first augmented reality engine being stopped, the processor is configured to output the second graphical overlay instead of the first graphical overlay.

**2.** The signal processing device of claim 1, wherein in response to the first augmented reality engine being stopped, the processor is configured to execute the second augmented reality engine, and generate and output the second graphical overlay.

**3.** The signal processing device of claim 1, wherein in response to the first augmented reality engine being stopped, the second augmented reality engine is configured to transmit data related to the first graphical overlay to the second augmented reality engine by using the hypervisor.

**4.** The signal processing device of claim 1, wherein in response to the first augmented reality engine being restored, the second augmented reality engine is configured to transmit data related to the second graphical overlay to the first augmented reality engine by using the hypervisor.

**5.** The signal processing device of claim 1, wherein in response to the first augmented reality engine being restored, the second augmented reality engine is configured to transmit data related to the second graphical overlay to the first augmented reality engine through a shared memory or an input and output resource manager based on the hypervisor.

**6.** The signal processing device of claim 1, wherein:
in response to interruption of the first augmented reality engine being detected by a system monitor executed in the hypervisor, the second augmented reality engine is configured to generate and output the second graphical overlay through the input and output resource manager based on the hypervisor; and
in response to restoration of the first augmented reality engine being detected by the system monitor executed in the hypervisor, the second augmented reality engine is configured to transmit data related to the second graphical overlay to the first augmented reality engine through the input and output resource manager.

**7.** The signal processing device of claim 1, wherein a guest virtual machine among the plurality of virtual machines is configured to execute the first augmented reality engine, and
wherein a server virtual machine among the plurality of virtual machines is configured to execute the second augmented reality engine.

**8.** The signal processing device of claim 1, wherein the first augmented reality engine is executed on a first operating system, and the second augmented reality engine is executed on a second operating system different from the first operating system.

**9.** The signal processing device of claim 8, wherein:
a first data interface is executed on the first operating system, and the first augmented reality engine is executed on the first data interface; and
a second data interface is executed on the second operating system, and the second augmented reality engine is executed on the second data interface.

**10.** The signal processing device of claim 9, wherein the input and output resource manager executed based on the hypervisor is configured to receive camera data or sensor data from a camera or a sensor device, and provide the camera data or the sensor data to the first augmented reality engine or the second augmented reality engine.

**11.** The signal processing device of claim 1, wherein the processor is configured to execute the first augmented reality engine and the second augmented reality engine, and
wherein, in response to the first augmented reality engine being stopped, the processor is configured to output the second graphical overlay instead of the first graphical overlay.

**12.** The signal processing device of claim 11, wherein the first augmented reality engine is executed on a first operating system, the second augmented reality engine is executed on a second operating system different from the first operating system, a data interface is executed based on the hypervisor, the first augmented reality engine is executed on the first operating system, and the second augmented reality engine is executed on the second operating system.

**13.** The signal processing device of claim 12, wherein the input and output resource manager executed based on the hypervisor is configured to receive camera data or sensor data from a camera or a sensor device, and provide the camera data or the sensor data to the first augmented reality engine or the second augmented reality engine.

**14.** The signal processing device of claim 1, wherein the first graphical overlay comprises a first layer and a second layer, and
wherein the second graphical overlay comprises the first layer and a third layer including less data than the second layer.

**15.** The signal processing device of claim 14, wherein the first layer comprises vehicle speed information and vehicle heading direction information,
wherein the second layer comprises a preceding vehicle object and an indicator of a distance to a preceding vehicle, and
wherein the third layer comprises the preceding vehicle object.

**16.** The signal processing device of claim 1, wherein a server virtual machine among the plurality of virtual machines is configured to execute the first augmented reality engine and the second augmented reality engine.

**17.** The signal processing device of claim 1, wherein any one guest virtual machine among the plurality of virtual machines is configured to execute the first augmented reality engine and the second augmented reality engine.

**18.** An augmented reality apparatus for a vehicle, the apparatus comprising:
at least one camera;
an image projection device configured to project forward an image; and
a signal processing device including a processor configured to generate a graphical overlay based on camera data from the camera,
wherein the signal processing device comprises the signal processing device of any one of claims 1 to 17.

## Amended claims

### Amended claims under Art. 19.1 PCT

**1.** A signal processing device comprising:
a memory configured to store map data; and
a processor configured to generate a graphical overlay based on camera data from a camera, the map data, or sensor data from a sensor device,
wherein the processor is configured to :
execute a plurality of virtual machines on an executed hypervisor based on a first mode,
generate a first graphical overlay through a first augmented reality engine executed in one of the plurality of virtual machines or generate a second graphical overlay, including less data than the first graphical overlay, through a second augmented reality engine executed in some of the plurality of virtual machines based on a second mode,
wherein in response to the first augmented reality engine being stopped based on the first mode, the processor is configured to output the second graphical overlay instead of the first graphical overlay based on the second mode,
wherein the first graphic overlay in the first mode is displayed with different content than the second graphic overlay in the second mode.

**2.** currently amended) The signal processing device of claim 1, wherein the processor is configured to display the second graphic overlay including a part of the first graphic overlay omitted, or display the second graphic overlay simplified than the first graphic overlay.

**3.** The signal processing device of claim 1, wherein in response to the first augmented reality engine being stopped, the second augmented reality engine is configured to transmit data related to the first graphical overlay to the second augmented reality engine by using the hypervisor.

**4.** The signal processing device of claim 1, wherein in response to the first augmented reality engine being restored, the second augmented reality engine is configured to transmit data related to the second graphical overlay to the first augmented reality engine by using the hypervisor.

**5.** The signal processing device of claim 1, wherein in response to the first augmented reality engine being restored, the second augmented reality engine is configured to transmit data related to the second graphical overlay to the first augmented reality engine through a shared memory or an input and output resource manager based on the hypervisor.

**6.** The signal processing device of claim 1, wherein:
in response to interruption of the first augmented reality engine being detected by a system monitor executed in the hypervisor, the second augmented reality engine is configured to generate and output the second graphical overlay through the input and output resource manager based on the hypervisor; and
in response to restoration of the first augmented reality engine being detected by the system monitor executed in the hypervisor, the second augmented reality engine is configured to transmit data related to the second graphical overlay to the first augmented reality engine through the input and output resource manager.

**7.** The signal processing device of claim 1, wherein a guest virtual machine among the plurality of virtual machines is configured to execute the first augmented reality engine, and
wherein a server virtual machine among the plurality of virtual machines is configured to execute the second augmented reality engine.

**8.** The signal processing device of claim 1, wherein the first augmented reality engine is executed on a first operating system, and the second augmented reality engine is executed on a second operating system different from the first operating system.

**9.** The signal processing device of claim 8, wherein:
a first data interface is executed on the first operating system, and the first augmented reality engine is executed on the first data interface; and
a second data interface is executed on the second operating system, and the second augmented reality engine is executed on the second data interface.

**10.** The signal processing device of claim 9, wherein the input and output resource manager executed based on the hypervisor is configured to receive camera data or sensor data from a camera or a sensor device, and provide the camera data or the sensor data to the first augmented reality engine or the second augmented reality engine.

**11.** The signal processing device of claim 1, wherein the processor is configured to execute the first augmented reality engine and the second augmented reality engine, and
wherein, in response to the first augmented reality engine being stopped, the processor is configured to output the second graphical overlay instead of the first graphical overlay.

**12.** The signal processing device of claim 11, wherein the first augmented reality engine is executed on a first operating system, the second augmented reality engine is executed on a second operating system different from the first operating system, a data interface is executed based on the hypervisor, the first augmented reality engine is executed on the first operating system, and the second augmented reality engine is executed on the second operating system.

**13.** The signal processing device of claim 12, wherein the input and output resource manager executed based on the hypervisor is configured to receive camera data or sensor data from a camera or a sensor device, and provide the camera data or the sensor data to the first augmented reality engine or the second augmented reality engine.

**14.** The signal processing device of claim 1, wherein the first graphical overlay comprises a first layer and a second layer, and
wherein the second graphical overlay comprises the first layer and a third layer including less data than the second layer.

**15.** The signal processing device of claim 14, wherein the first layer comprises vehicle speed information and vehicle heading direction information,
wherein the second layer comprises a preceding vehicle object and an indicator of a distance to a preceding vehicle, and
wherein the third layer comprises the preceding vehicle object.

**16.** The signal processing device of claim 1, wherein a server virtual machine among the plurality of virtual machines is configured to execute the first augmented reality engine and the second augmented reality engine.

**17.** The signal processing device of claim 1, wherein any one guest virtual machine among the plurality of virtual machines is configured to execute the first augmented reality engine and the second augmented reality engine.

**18.** An augmented reality apparatus for a vehicle, the apparatus comprising:
at least one camera;
an image projection device configured to project forward an image; and
a signal processing device including a processor configured to generate a graphical overlay based on camera data from the camera,
wherein the signal processing device comprises the signal processing device of any one of claims 1 to 17.
